# DEMANDE DE BREVET EUROPEEN

(11) **EP 1 025 946 A1**
(43) Date de publication de la demande: **09.08.2000**
(21) Numéro de dépôt: 00400129.3
(22) Date de dépôt: 19.01.2000
(51) Int. Cl.: B23K 9/32

(54) **Ensemble masque de protection/générateur de courant pour soudage au coupage a l'arc électrique**

(30) Priorité: 04.02.1999 FR 9901301
(71) Demandeur: LA SOUDURE AUTOGENE FRANCAISE, F-75007 Paris (FR); L'AIR LIQUIDE S.A., 75321 Paris Cédex 07 (FR)
(72) Inventeur: Briand, Francis, 75010 Paris (FR); Broquin, Rémy, 95280 Jouy le Moutier (FR)
(74) Mandataire: Le Moenner, Gabriel

(57) **Abrégé**

L'invention concerne un ensemble formé d'un masque de protection et d'un générateur de courant pouvant être mis en oeuvre par un opérateur dans une opération de travail à l'arc électrique, telle une opération de soudage TIG, MIG ou MAG, une opération de coupage plasma ou de traitement thermique.

Le masque de protection comprend des moyens de capture vocale permettant de capturer un ordre vocal émis par l'opérateur et des moyens émetteurs pour transmettre un signal d'ordre à des moyens de réception reliés électriquement au générateur.

Le générateur de courant comporte des moyens de contrôle du fonctionnement dudit générateur et agissant en réponse au signal d'ordre pour commander le générateur en fonction du signal d'ordre de l'opérateur.

## Description

La présente invention concerne le domaine des casques ou masques utilisables dans une opération de travail à l'arc électrique, notamment une opération de soudage, de coupage ou analogue, et destinés à protéger l'opérateur. Dans le cadre de l'invention, on utilise indifféremment les termes casques ou masques.

Dans la plupart des opérations de travail à l'arc électrique, en particulier le soudage ou le coupage à l'arc, l'opérateur porte un masque ou casque de protection.

En général, un tel masque de protection est, d'une part, destiné à protéger l'opérateur des nuisances inhérentes aux travaux de soudage, en particulier des projections éventuelles de métal en fusion, des émissions de fumées, des rayonnements ultraviolet émis par l'arc ou des sources de rayonnements ultraviolet susceptibles d'être utilisées pour amorcer l'arc par exemple, et, d'autre part, à permettre à l'opérateur d'apprécier et de mieux discerner le travail qu'il est en train de réaliser, grâce à la présence de filtres, de verres teintés ou autres moyens analogues atténuant l'éblouissement généré par l'arc ou à la présence de caméras vidéo destinées à capter et filtrer des images de la zone de soudage.

En effet, les masques ou casques de soudage ou de coupage sont habituellement munis de simples filtres atténuateurs passifs ou bien de cartouches LCD qui ajustent automatiquement l'atténuation en fonction de la lumière issue de l'arc.

Par ailleurs, le document US-A-5,317,643 divulgue un casque de soudage muni d'un dispositif émetteur et récepteur audio permettant rendant possible une communication entre eux de plusieurs opérateurs durant une opération de soudage.

En outre, la plupart des opérations de soudage ou coupage se fait à l'aide d'une torche de travail à l'arc électrique qui peut être soit automatique, c'est-à-dire que l'opérateur ne la tient pas mais qu'elle est supportée par un bâti mécanique, soit manuelle c'est-à-dire tenue en main par l'opérateur.

Une fois que la torche a été positionnée par rapport à la ou aux pièces à travailler, il faut commencer l'opération de soudage ou de coupage.

En travail à l'arc de type manuel, cela est réalisé grâce à une gâchette, tel un interrupteur, situé sur la torche et qui, quand on l'actionne, donne au générateur de courant un ordre de début de cycle de soudage ou de coupage.

De là, s'il est nécessaire de modifier le cycle de soudage ou de coupage en cours de travail, c'est-à-dire de modifier un ou des paramètres de soudage ou de coupage, il faut le faire soit à partir d'une télécommande située sur la torche ou à proximité de l'opérateur, par exemple sur un boîtier spécial, soit directement par actionnement des commandes dédiées à cela et placées sur le générateur, ce qui implique que le générateur doit se situer suffisamment proche de l'opérateur et donc du site de soudage ou de coupage.

A l'inverse, dans le cas d'une installation de travail à l'arc de type automatique, le début de cycle est habituellement commandé par actionnement d'un bouton de contrôle du départ du cycle situé sur le pupitre de commande de la machine et, en général, éloigné du lieu de soudage proprement-dit.

De là, toute modification du cycle de soudage se fait, en général, directement à partir du pupitre de commande contrôlant l'installation.

Cependant, dans les deux cas, certains inconvénients existent.

Ainsi, en soudage manuel, par exemple, le simple fait d'utiliser une gâchette d'actionnement pour débuter l'opération de soudage peut provoquer un défaut de positionnement de la torche dans la mesure où, en exerçant une pression sur la gâchette, l'opérateur exerce aussi un effort sur la torche et peut alors induire par là-même un écart dans la précision de son. positionnement.

Or, ce positionnement doit être précis car l'électrode ou le fil fusible doit être situé précisément dans le plan du joint à souder.

D'ailleurs, il existe des configurations et des installations dans lesquelles le soudeur démarre le cycle de soudage en appuyant sur une pédale destinée justement à éviter ce problème de défaut de positionnement de la torche.

De plus, dans certaines opérations de soudage, notamment en soudage TIG ou MIG par points par exemples, l'opérateur peut être conduit à répéter plusieurs fois par minute cette même pression, conduisant ainsi à une fatigue importante du pouce et parfois même à des crampes musculaires chez l'opérateur.

Dès lors, si le cycle de soudage doit être modifié en cours d'opération de soudage, l'opérateur doit alors se servir de sa deuxième main ce qui n'est pas très aisé, d'une part, parce qu'elle est en général revêtue de gants de travail assez épais, rendant l'utilisation d'une télécommande assez difficile, et, d'autre part, parce qu'il est "aveugle" étant donné que le port du masque de soudage ne lui permet pas de distinguer ce qu'il fait au niveau de la télécommande ou de la face avant du poste. Il faut souligner que l'opérateur ne peut pas simplement enlever son masque de protection car il doit pouvoir apprécier les conséquences sur l'arc des modifications qu'il fait subir au cycle de soudage et donc audit arc.

Le problème qui se pose alors est de pouvoir modifier un cycle de travail à l'arc, notamment un cycle de soudage ou de coupage, de manière simple, rapide et efficace, notamment sans que l'opérateur ne soit obligé de se déplacer jusqu'au générateur de courant pour modifier les paramètres à changer ou ne soit contraint d'enlever son masque de protection et qui évite tout défaut de positionnement de la torche engendré par un actionnement trop brutal d'une gâchette d'actionnement.

Pour résoudre ce problème, la présente invention propose un ensemble formé d'au moins d'un masque de protection et d'au moins d'un générateur de courant susceptible d'être mis en oeuvre par un opérateur dans au moins une opération de travail à l'arc électrique, en particulier une opération de soudage ou de coupage, dans lequel :
- le masque de protection comporte :
   . des moyens de protection faciaux comprenant un écran facial,
   . des moyens de maintien permettant de maintenir le masque en position sur la tête de l'opérateur,
   . des moyens de capture vocale permettant de recueillir au moins un ordre vocal émis par l'opérateur, et
   . des moyens émetteurs de signal d'ordre pour transmettre au moins un signal d'ordre à des moyens de réception de signal d'ordre reliés électriquement à des moyens de reconnaissance vocale dudit générateur, et
- le générateur de courant comporte des moyens de reconnaissance vocale commandant des moyens de contrôle de générateur agissant sur ledit générateur en réponse audit au moins un signal d'ordre.

L'invention concerne aussi un ensemble formé d'au moins d'un masque de protection et d'au moins d'un générateur de courant, en particulier tel que défini ci-dessus, susceptible d'être mis en oeuvre par un opérateur dans au moins une opération de travail à l'arc électrique, en particulier une opération de soudage ou de coupage, dans lequel :
- le masque de protection comporte :
   . des moyens de protection faciaux comprenant un écran facial,
   . des moyens de maintien permettant de maintenir le masque en position sur la tête de l'opérateur,
   . des moyens de réception d'information pour recevoir au moins une information délivrée par le générateur,
   . des moyens d'audition d'information reliés électriquement auxdits moyens de réception d'information et permettant à l'opérateur d'entendre au moins une information reçue par lesdits moyens de réception d'information, et
- le générateur de courant comporte :
   . des moyens d'émission d'information pour envoyer au moins une information délivrée par le générateur auxdits moyens de réception d'information,
   . des moyens de synthèse vocale reliés auxdits moyens d'émission d'information,
   . des moyens de fourniture d'information reliés auxdits moyens de synthèse vocale.

Selon le cas, l'ensemble selon l'invention peut comprendre l'une ou plusieurs des caractéristiques suivantes :
- il comporte, en outre, des moyens de traitement et/ou d'interprétation pour traiter et/ou interpréter ledit au moins un ordre vocal émis par l'opérateur, de préférence lesdits moyens de traitement et/ou d'interprétation sont portés par le masque ou par le générateur de courant.
- au moins signal d'ordre transmis par les moyens émetteurs de signal d'ordre est au moins un ordre vocal émis par l'opérateur traité par lesdits moyens de traitement et/ou d'interprétation, avant et/ou après transmission par les moyens émetteurs de signal d'ordre.
- les moyens de contrôle de générateur agissent sur ledit générateur de manière à modifier au moins un paramètre de cycle de travail à l'arc, de préférence les moyens de contrôle sont portés par une commande à distance manuelle.
- les moyens de contrôle de générateur agissent en réponse audit au moins un signal d'ordre pour modifier au moins un paramètre choisi parmi le début ou la fin d'au moins un cycle de travail à l'arc, la durée totale d'au moins un cycle de travail à l'arc, le niveau de courant, le débit d'au moins un gaz, la vitesse d'avance d'un fil fusible, le niveau de tension, un changement de programme de soudage, et la durée d'alimentation en un flux gazeux.
- les moyens de capture vocale sont choisis parmi les microphones, de préférence un microphone à haute fréquence.
- il comporte, en outre, des moyens récepteurs d'au moins un signal d'ordre permettant de recevoir au moins un signal d'ordre émis par lesdits moyens émetteurs, de préférence les moyens récepteurs sont portés par une torche de travail à l'arc, par le générateur de courant ou par une commande à distance manuelle de générateur, de préférence par une commande à distance manuelle.
- lesdits moyens récepteurs d'au moins un signal d'ordre sont reliés électriquement auxdits moyens de moyens de traitement et/ou d'interprétation et/ou auxdits moyens de contrôle de cycle.

Selon un autre aspect, l'invention concerne aussi un masque de protection et/ou un générateur de courant susceptibles de faire partie d'un ensemble selon l'invention.

En particulier, le masque de protection est utilisable dans une opération de travail à l'arc électrique et comporte des moyens de protection faciaux comprenant un écran facial et des moyens de maintien permettant de maintenir le masque en position sur la tête d'un opérateur, et comprenant, en outre :
. des moyens de capture vocale permettant de recueillir au moins un ordre vocal émis par l'opérateur, et
. des moyens émetteurs de signal (d'ordre pour transmettre au moins un signal d'ordre à des moyens de réception de signal d'ordre reliés électriquement à des moyens de reconnaissance vocale d'un générateur de courant, et/ou
. des moyens de réception d'information pour recevoir au moins une information délivrée par un générateur de courant, et
. des moyens d'audition d'information reliés électriquement auxdits moyens de réception d'information et permettant à l'opérateur d'entendre au moins une information reçue par lesdits moyens de réception d'information.

En outre, le générateur de courant électrique est aussi utilisable dans une opération de travail à l'arc électrique et comporte des moyens de reconnaissance vocale commandant des moyens de contrôle de générateur susceptible d'agir sur un générateur en réponse à au moins un signal d'ordre et/ou des moyens d'émission d'information pour envoyer au moins une information délivrée par le générateur à des moyens de réception d'information, des moyens de synthèse vocale reliés auxdits moyens d'émission d'information, et des moyens de fourniture d'information reliés auxdits moyens de synthèse vocale.

L'invention concerne aussi l'utilisation d'un tel ensemble masque/générateur dans une opération de travail d'une pièce métallique, en particulier une opération de soudage plasma, à électrode, MAG (Metal Active Gas), MIG (Metal Inert Gas) ou TIG (Tungsten Inert Gas) ou dans une opération de coupage par jet de plasma, de projection thermique ou de traitement thermique.

Selon encore un autre aspect, l'invention concerne aussi un procédé de commande du fonctionnement d'un générateur de courant susceptible d'être mis en oeuvre par un opérateur dans une opération de travail à l'arc électrique, en particulier une opération de soudage ou de coupage, dans lequel ledit générateur de courant est commandé à partir d'au moins un ordre vocal émis par l'opérateur.

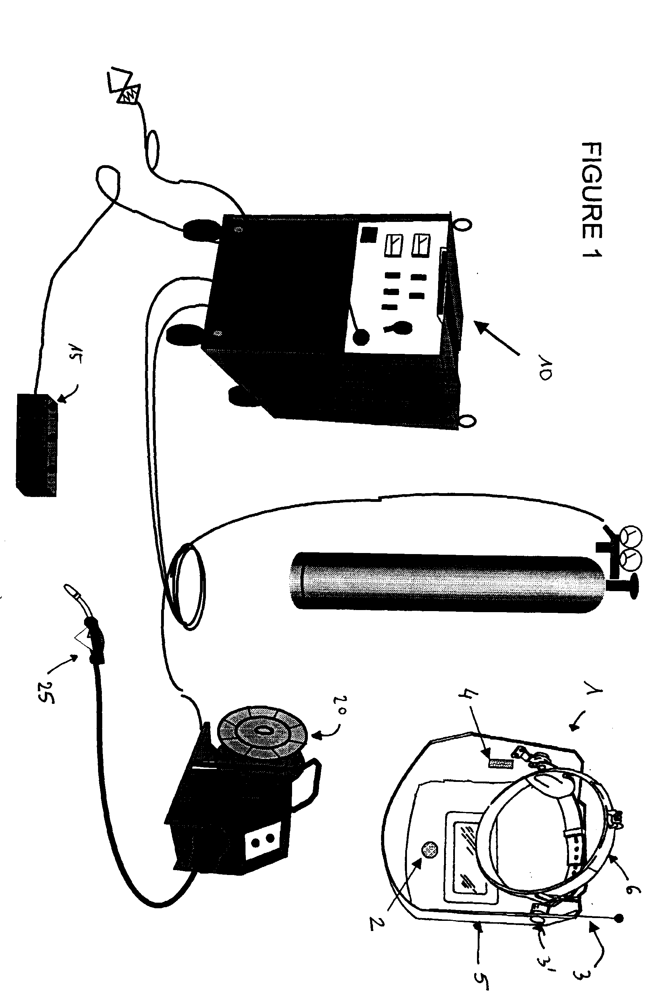

La présente invention va être mieux comprise grâce à un exemple de réalisation d'un ensemble de soudage selon l'invention formé d'un masque 1 ou casque et d'un générateur de courant 10, lequel ensemble est schématisé sur la figure 1 ci-annexée.

Plus précisément, sur la figure 1, le masque 1 ou casque de soudage ou de coupage comprend des moyens de commande vocale 2, tel un microphone, permettant de commander le démarrage d'un cycle de soudage, de coupage ou analogue, ou de le modifier en cours d'opération et ce, de manière simple et efficace.

Pour ce faire, il suffit à un opérateur portant le masque 1 sur sa tête d'énoncer un ou des ordres simples et codifiés dans les moyens à commande vocale 2, lesquels ordres sont ensuite transmis par des moyens émetteurs 3 de signal d'ordre, tel un émetteur haute fréquence, jusqu'à et/ou reconnus par des moyens de traitement et d'interprétation vocale qui coopèrent avec des moyens de contrôle, de manière à agir sur le générateur 10, par exemple, pour modifier ou adapter le cycle de soudage ou de coupage en fonction des ordres énoncés par l'opérateur.

Ainsi, par exemple en soudage TIG (pour Tungsten Inert Gas), l'opérateur peut, à partir d'ordres simples soit :
- démarrer le cycle de soudage: arrêt / marche,
- modifier le courant de soudage suivant un incrément de courant prédéfini dans le générateur : courant "plus" / courant "moins",
- augmenter ou diminuer le débit gazeux : gaz "plus" / gaz "moins".

L'opérateur a ainsi tout loisir de démarrer, d'arrêter ou de modifier le cycle de soudage en se concentrant exclusivement et sans entrave ou gêne sur le travail qu'il est en train de réaliser.

De même, en soudage MIG (Metal Inert Gas), on peut modifier la vitesse d'avance du fil et la tension de soudage suivant le même principe.

Dans tous les cas, il suffit à l'opérateur d'énoncer un ou des ordres convenus dans le microphone 2 placé dans le casque 1.

Ce ou ces ordres sont alors transmis au générateur 10 de courant de soudage par câbles ou par voie aérienne, par exemple grâce à un émetteur 3 placé sur le casque 1.

Un récepteur (non représenté) est placé sur ou dans le générateur 10, la commande à distance 15, le dévidoir 20 de fil ou la torche 25 qui est le point le plus proche du soudeur, ou la machine elle-même en soudage/coupage automatique, et ces ordres sont traités et interprétés grâce à des moyens de traitement, d'interprétation et/ou de reconnaissance vocales (non représentés) situés dans le générateur 10, la commande à distance 15, le dévidoir 20 de fil ou la torche 25.

Une fois identifiés et traduits, ces ordres sont transformés en actions, c'est-à-dire que le cycle de soudage est modifié en fonction des ordres reçus par le générateur 10.

Selon le mode de réalisation choisi, les moyens d'interprétations et/ou de reconnaissance vocale peuvent être placés dans le casque 1 et, dans ce cas, l'émetteur 3 placé sur le casque 1 transmet les signaux qui vont déclencher la ou les modifications de cycle au niveau du générateur 10.

En outre, sur la figure 1, on constate que le masque 1 est aussi équipé de moyens de protection faciaux comprenant un écran facial 5, des moyens de maintien 6 permettant de maintenir le masque 1 en position sur la tête de l'opérateur, ainsi que des moyens de réception 3' d'information pour recevoir au moins une information délivrée par le générateur 10, et des moyens d'audition 4 d'information reliés électriquement auxdits moyens de réception 3' d'information et permettant à l'opérateur d'entendre au moins une information reçue par lesdits moyens de réception d'information 3. Il est à noter que, dans ce mode de réalisation, les moyens émetteurs 3 de signal d'ordre et les moyens de réception 3' d'information sont combinés en un même dispositif émetteur/récepteur.

D'autre part, le générateur 10 comprend aussi des moyens d'émission d'information pour envoyer au moins une information délivrée par le générateur 10 aux moyens de réception 3' d'information portés par le masque 1, des moyens de synthèse vocale reliés auxdits moyens d'émission d'information, et des moyens de fourniture d'information reliés auxdits moyens de synthèse vocale. Ces différents moyens ne sont pas visibles sur la figure 1 car incorporés à l'intérieur du générateur 10.

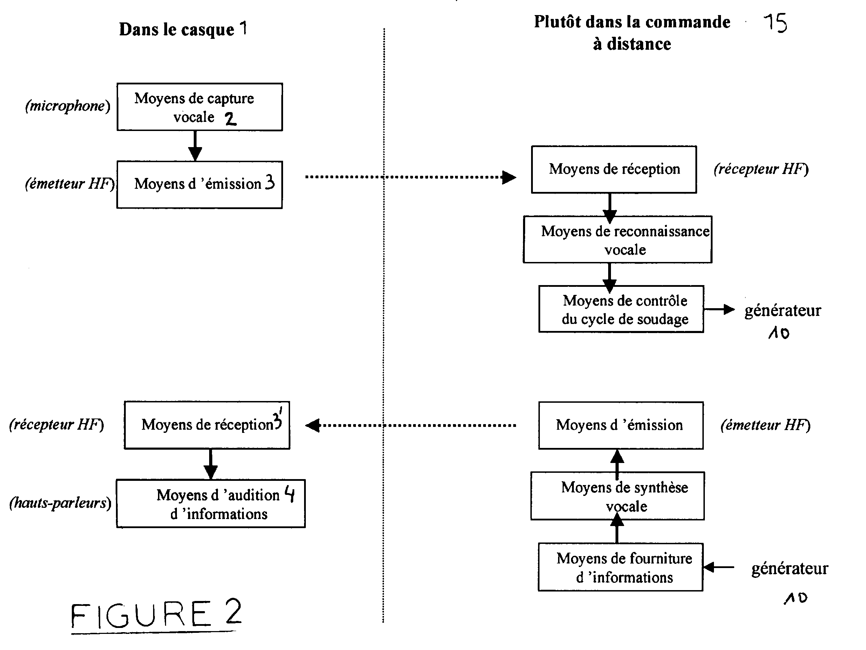

Par ailleurs, la Figure 2 schématise les différents échanges d'informations pouvant avoir lieu entre le masque 1 et le générateur 10 de courant, ainsi que les interconnections existant entre les différents moyens impliqués dans ces échanges d'information.

Comme on peut le voir, des informations sonores peuvent être échangées non seulement du masque 1 au générateur 10, mais aussi dans l'autre sens, c'est-à-dire du générateur 10 au masque 1.

En effet, le générateur 10 peut aussi envoyer des informations vers le masque 1 de soudage, par exemple des informations indiquant que la commande vocale à correctement exécuté un ordre (courant, tension, vitesse de fil....) ou des conseils de soudage.

Dans ce cas, le masque est équipé d'un dispositif d'écoute, tels un ou des écouteurs.

Par ailleurs, il peut exister des ordres n'ayant aucune influence ou action sur le cycle de soudage mais néanmoins reconnus par les moyens de capture d'information 2 du masque 1. Par exemple, l'ordre "verrouiller sécurité" peut permettre un blocage des moyens à reconnaissance vocale tant qu'un "contre-ordre" n'est pas prononcé, tel "stop".

De façon, générale, selon l'invention, le microphone, le ou les écouteurs, les moyens émetteur et/ou récepteur peuvent être fixés directement au masque ou, de manière équivalente, être indépendant de celui-ci en constituant une structure d'ensemble qui est introduite dans le masque ou au moins partiellement recouverte par celui-ci durant l'opération de soudage.

Ainsi, sans sortir du cadre de la présente invention, on peut agencer le microphone, le ou les écouteurs, les moyens émetteur et/ou récepteur en une structure d'ensemble positionnée, par exemple, d'abord sur la tête de l'opérateur, puis recouverte, c'est-à-dire protégée ensuite, par un masque de protection faciale positionné face au visage de l'opérateur.

En d'autres termes, les moyens de capture vocale permettant de recueillir au moins un ordre vocal émis par l'opérateur, et les moyens émetteurs de signal d'ordre pour transmettre au moins un signal d'ordre à des moyens de réception de signal d'ordre reliés électriquement à des moyens de reconnaissance vocale dudit générateur, les moyens de réception d'information pour recevoir au moins une information délivrée par le générateur, et/ou les moyens d'audition d'information reliés électriquement auxdits moyens de réception d'information et permettant à l'opérateur d'entendre au moins une information reçue par lesdits moyens de réception d'information peuvent être fixés solidairement audit masque de protection ou, de manière alternative, simplement incorporés ou situés dans ledit masque, durant le travail, sans pour autant être fixés à celui-ci.

## Revendications

1. Ensemble formé d'au moins d'un masque (1) de protection et d'au moins d'un générateur (10) de courant susceptible d'être mis en oeuvre par un opérateur dans au moins une opération de travail à l'arc électrique, en particulier une opération de soudage ou de coupage, dans lequel :
- le masque (1) de protection comporte :
. des moyens de protection faciaux comprenant un écran facial (5),
. des moyens de maintien (6) permettant de maintenir le masque (1) en position sur la tête de l'opérateur,
. des moyens de capture vocale (2) permettant de recueillir au moins un ordre vocal émis par l'opérateur, et
. des moyens émetteurs (3) de signal d'ordre pour transmettre au moins un signal d'ordre à des moyens de réception de signal d'ordre reliés électriquement à des moyens de reconnaissance vocale dudit générateur (10), et
- le générateur (10) de courant comporte des moyens de reconnaissance vocale commandant des moyens de contrôle de générateur agissant sur ledit générateur (10) en réponse audit au moins un signal d'ordre.

2. Ensemble formé d'au moins d'un masque de protection et d'au moins d'un générateur (10) de courant, en particulier selon la revendication 1, susceptible d'être mis en oeuvre par un opérateur dans au moins une opération de travail à l'arc électrique, en particulier une opération de soudage ou de coupage, dans lequel :
- le masque (1) de protection comporte :
. des moyens de protection faciaux comprenant un écran facial (5),
. des moyens de maintien (6) permettant de maintenir le masque (1) en position sur la tête de l'opérateur,
. des moyens de réception d'information (3') pour recevoir au moins une information délivrée par le générateur (10),
. des moyens d'audition (4) d'information reliés électriquement auxdits moyens de réception (3') d'information et permettant à l'opérateur d'entendre au moins une information reçue par lesdits moyens de réception (3') d'information, et
- le générateur (10) de courant comporte :
. des moyens d'émission d'information pour envoyer au moins une information délivrée par le générateur auxdits moyens de réception d'information,
. des moyens de synthèse vocale reliés auxdits moyens d'émission d'information,
. des moyens de fourniture d'information reliés auxdits moyens de synthèse vocale.

3. Ensemble selon la revendication 1, caractérisé en ce qu'il comporte, en outre, des moyens de traitement et/ou d'interprétation pour traiter et/ou interpréter ledit au moins un ordre vocal émis par l'opérateur, de préférence lesdits moyens de traitement et/ou d'interprétation sont portés par le masque (1) ou par le générateur de courant (10).

4. Ensemble selon l'une des revendications 1 ou 3, caractérisé en ce qu'au moins signal d'ordre transmis par les moyens émetteurs (3) de signal d'ordre est au moins un ordre vocal émis par l'opérateur traité par lesdits moyens de traitement et/ou d'interprétation, avant et/ou après transmission par les moyens émetteurs de signal (3) d'ordre.

5. Ensemble selon l'une des revendications 1, 3 ou 4, caractérisé en ce que les moyens de contrôle de générateur agissent sur ledit générateur (10) de manière à modifier au moins un paramètre de cycle de travail à l'arc, de préférence les moyens de contrôle sont portés par une commande à distance (15) manuelle.

6. Ensemble selon l'une des revendications 1 ou 3 à 5, caractérisé en ce que les moyens de contrôle de générateur agissent en réponse audit au moins un signal d'ordre pour modifier au moins un paramètre choisi parmi le début ou la fin d'au moins un cycle de travail à l'arc, la durée totale d'au moins un cycle de travail à l'arc, le niveau de courant, le débit d'au moins un gaz, la vitesse d'avance d'un fil fusible, le niveau de tension, un changement de programme de soudage, et la durée d'alimentation en un flux gazeux.

7. Ensemble selon l'une des revendications 1 ou 3 à 6, caractérisé en ce que les moyens de capture vocale (2) sont choisis parmi les microphones, de préférence un microphone à haute fréquence.

8. Ensemble selon l'une des revendications 1 ou 3 à 7, caractérisé en ce qu'il comporte, en outre, des moyens récepteurs d'au moins un signal d'ordre permettant de recevoir au moins un signal d'ordre émis par lesdits moyens émetteurs, de préférence les moyens récepteurs sont portés par une torche (25) de travail à l'arc, par le générateur (10) de courant ou par une commande à distance (15) manuelle de générateur, de préférence par une commande à distance (15) manuelle.

9. Ensemble selon l'une des revendications 1 ou 2 à 8, caractérisé en ce que lesdits moyens récepteurs d'au moins un signal d'ordre sont reliés électriquement auxdits moyens de moyens de traitement et/ou d'interprétation et/ou auxdits moyens de contrôle de cycle.

10. Masque (1) de protection utilisable dans une opération de travail à l'arc électrique, susceptible de faire partie d'un ensemble selon l'une des revendications 1 à 9, comportant des moyens de protection faciaux comprenant un écran facial (5) et des moyens de maintien (6) permettant de maintenir le masque (1) en position sur la tète d'un opérateur, et comprenant, en outre :
. des moyens de capture vocale (2) permettant de recueillir au moins un ordre vocal émis par l'opérateur, et
. des moyens émetteurs de signal (3) d'ordre pour transmettre au moins un signal d'ordre à des moyens de réception de signal d'ordre reliés électriquement à des moyens de reconnaissance vocale d'un générateur de courant, et/ou
. des moyens de réception (3') d'information pour recevoir au moins une information délivrée par un générateur (10) de courant, et
. des moyens d'audition (4) d'information reliés électriquement auxdits moyens de réception (3') d'information et permettant à l'opérateur d'entendre au moins une information reçue par lesdits moyens de réception (3') d'information.

11. Générateur (10) de courant électrique utilisable dans une opération de travail à l'arc électrique, susceptible de faire partie d'un ensemble selon l'une des revendications 1 à 9, comportant des moyens de reconnaissance vocale commandant des moyens de contrôle de générateur susceptible d'agir sur un générateur en réponse à au moins un signal d'ordre et/ou des moyens d'émission d'information pour envoyer au moins une information délivrée par le générateur à des moyens de réception d'information, des moyens de synthèse vocale reliés auxdits moyens d'émission d'information, et des moyens de fourniture d'information reliés auxdits moyens de synthèse vocale.

12. Utilisation d'un ensemble selon l'une des revendications 1 à 9 dans une opération de soudage plasma, à électrode, MIG, MAG ou TIG.

13. Utilisation d'un ensemble selon l'une des revendications 1 à 9 dans une opération de coupage par jet de plasma, de projection thermique ou de traitement thermique.

14. Procédé de commande du fonctionnement d'un générateur (10) de courant susceptible d'être mis en oeuvre par un opérateur dans une opération de travail à l'arc électrique, en particulier une opération de soudage ou de coupage, dans lequel ledit générateur (10) de courant est commandé à partir d'au moins un ordre vocal émis par l'opérateur.
